# FASCICULE DE BREVET EUROPEEN

(11) **EP 2 780 226 B1**
(45) Date de publication et mention de la délivrance du brevet: **08.11.2017**
(21) Numéro de dépôt: 12769349.7
(22) Date de dépôt: 17.09.2012
(51) Int. Cl.: B64C 3/20, B64C 3/26, B29C 65/48, B29C 65/00

(54) **PROCEDE POUR L'ASSEMBLAGE D'UNE STRUCTURE DITE CAISSON ET STRUCTURE OBTENUE PAR UN TEL PROCEDE**
VERFAHREN ZUR MONTAGE EINER SO GENANNTEN BOXENSTRUKTUR UND IN EINEM SOLCHEN VERFAHREN HERGESTELLTE STRUKTUR
METHOD FOR ASSEMBLING A STRUCTURE KNOWN AS A BOX STRUCTURE AND STRUCTURE OBTAINED BY SUCH A METHOD

(30) Priorité: 16.09.2011 FR 1158277
(43) Date de publication de la demande: 24.09.2014
(73) Titulaire: Daher Aerospace, 41400 Saint Julien De Chedon (FR)
(72) Inventeur: BAILLY, Dominique, 44118 La Chevroliere (FR); HOTTIN, Mathieu, 44860 Saint Aignan De Grandlieu (FR)
(74) Mandataire: Ipside
(86) Numéro de dépôt international: PCT/EP2012/068264
(87) Numéro de publication internationale: WO 2013/038012

(56) Documents cités:
- DE-A1- 10 260 430
- DE-A1- 19 844 411
- JP-A- 57 152 917
- US-A- 5 273 606
- US-A1- 2006 049 552
- US-A1- 2006 243 382
- US-A1- 2007 261 787

## Description

L'invention concerne un procédé pour l'assemblage d'une structure dite caisson et une structure obtenue par un tel procédé. Elle est plus particulièrement, mais non exclusivement, adaptée à la réalisation de structures caisson pour des applications aéronautiques telles que des voilures ou des empennages, constituées de matériaux métalliques ou composites à renfort fibreux.

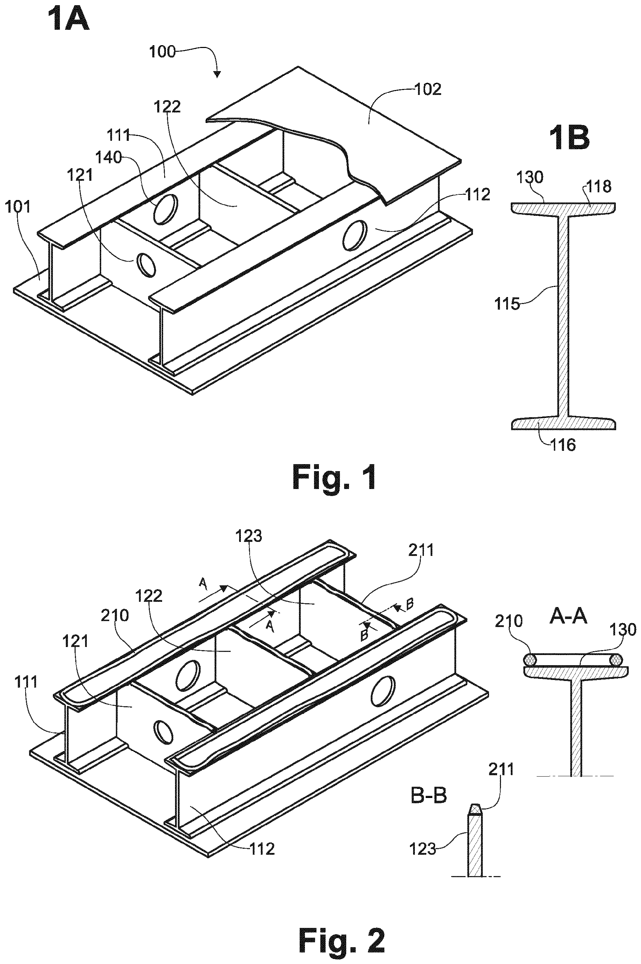

Une structure, dite caisson, représentée schématiquement figure 1A est un ensemble structural, c'est-à-dire apte à transmettre des charges mécaniques, comportant deux peaux (101, 102) séparées par des raidisseurs s'étendant dans deux directions concourantes, lesdits raidisseurs étant généralement désignés sous les termes de « longerons » (111, 112), ou « *spars* » en anglais, pour les raidisseurs les plus longs et de « nervures » (121, 122), ou « *ribs*» en anglais, pour les raidisseurs les plus courts.

Figure 1B, ces raidisseurs se présentent, selon une section droite, sous une forme générale comprenant deux semelles (116,118) séparées par une âme (115), les peaux (101, 102) étant liées aux semelles (116,118) sur des surfaces de pose (130) desdites semelles. Lesdits raidisseurs apportent la rigidité à la structure, alors que les peaux assurent le drainage des charges mécaniques vers l'ensemble desdits raidisseurs. Ainsi, la qualité d'assemblage des peaux avec les raidisseurs est primordiale pour assurer ce transfert mécanique. Les raidisseurs et les peaux délimitent des espaces fermés, lesquels sont accessibles par des trappes (140) pratiquées dans les raidisseurs.

Selon l'art antérieur, et plus particulièrement dans le domaine aéronautique, l'assemblage des peaux avec les raidisseurs est réalisé par des fixations de type rivet. Cette solution technique présente néanmoins des inconvénients. En effet, la pose des rivets implique de percer les semelles des raidisseurs ce qui les affaiblit. Ces perçages sont des sources potentielles pour l'initiation de fissures de fatigue, c'est pourquoi lesdits rivets sont généralement montés en forte interférence afin de solliciter en compression les parois des trous les recevant. Les flux d'efforts transmis entre les peaux et les raidisseurs passent par un mode de sollicitation en matage desdites parois des trous. Ainsi, l'utilisation de matériaux ne présentant pas d'aptitude à la déformation plastique tels que des matériaux composites à renfort fibreux est défavorable, tant du point de vue de la résistance au matage que de la possibilité de montage en forte interférence. Même en présence de matériaux métalliques, cette solution d'assemblage est longue de mise en oeuvre et nécessite, au moins pour l'assemblage d'une des peaux, l'utilisation de fixations aveugles pouvant être installées en n'accédant que sur une face de ladite peau, ce type de fixation étant par ailleurs onéreux et de pose délicate. Des solutions d'assemblage par collage ont été envisagées dans l'art antérieur.

Ces solutions de collage sont dites par interposition. Elles consistent à encoller l'interface d'assemblage entre la peau et la semelle, soit les deux surfaces soit l'une d'entre elles selon le mode de réalisation, puis à mettre en contact sous pression les deux surfaces, ladite pression étant suffisante pour faire fluer la colle de sorte que celle-ci remplisse, selon une épaisseur uniforme et déterminée, l'interface entre les deux pièces. Toutefois, si de telles solutions sont envisageables pour l'assemblage de panneaux raidis, c'est-à-dire de raidisseurs assemblés avec une peau simple, ces techniques sont délicates voire impossibles de mise en oeuvre sur des structures en caisson. En effet, si pour un panneau raidi, les raidisseurs peuvent être collés l'un après l'autre sur ladite peau, l'assemblage de la seconde peau d'une structure en caisson, implique de coller tous les raidisseurs en même temps. Une telle opération implique une grande quantité de colle à étaler et à faire fluer aux contacts, ce qui n'est pas envisageable lorsque les surfaces concernées sont importantes compte tenu du temps ouvert réduit pour l'application de la colle et de la pression très importante et uniforme à appliquer pour obtenir un fluage adéquat de ladite colle et l'absence de défauts de collage.

Le document US 5 273 606 décrit l'assemblage par collage d'une peau et d'un panneau raidi sur cette peau. En considérant que ce panneau raidi puisse être assimilé à un raidisseur, ce document ne décrit pas l'assemblage par collage de la semelle dudit raidisseur sur la peau. En effet le procédé d'assemblage décrit dans ce document est réalisé en périphérie du panneau raidi, par l'intermédiaire d'un ourlet réalisé par le pliage d'une sur-longueur de la peau sur la périphérie de ladite peau. Ledit ourlet appui sur la périphérie du panneau raidi, le collage est réalisé entre les deux faces en vis-à-vis de cet ourlet. Ainsi, ce principe d'assemblage n'est applicable qu'entre deux panneaux, le collage limité à la périphérie ne permettrait pas le transfert de charge vers les raidisseurs.

Le document JP 57 152917 décrit un procédé de collage d'un raidisseur sur une peau. Toutefois, ce document ne décrit pas le collage de la semelle dudit raidisseur sur la peau.

Ces deux documents de l'art antérieur visent à résoudre le problème technique, lié au collage consistant à obtenir un film de colle continu et d'épaisseur uniforme sur toute l'interface d'assemblage. Les solutions à ce problème technique proposées par ces documents de l'art antérieur consistent à réaliser des espaces d'épaisseur sensiblement calibrée, espaces dans lesquels la colle est injectée. Ces deux documents de l'art antérieur enseignent la création de ces espaces directement dans les éléments assemblés, par la création d'un ourlet ou par la création d'un bossage créant un espace dans l'aile du raidisseur. Tant le bossage que l'ourlet rendent la réalisation des pièces plus complexes et plus coûteuses et ajoutent de la masse au panneau sans accroître sa résistance, ce qui est particulièrement défavorable dans un contexte aéronautique.

Afin de résoudre les inconvénients de l'art antérieur l'invention propose un procédé pour l'assemblage d'une peau et de la semelle d'un raidisseur ledit procédé comprenant les étapes consistant à :
a. étancher la périphérie du contact entre la peau et la semelle du raidisseur
   en déposant un cordon de colle sur la semelle du raidisseur destinée à entrer en contact avec la peau et en accostant, ensuite, la peau sur la semelle du raidisseur;
b. réaliser un premier orifice, dit d'injection, et un deuxième orifice, dit d'évent, dans la peau, lesdits orifices débouchant à l'interface entre la peau et la semelle du raidisseur ;
c. injecter par le premier orifice de la colle à l'interface entre la peau et la semelle du raidisseur en maintenant ladite peau en contact avec le raidisseur jusqu'à remplir l'interface entre la peau et le raidisseur.

Ainsi, la quantité de colle à appliquer sur le raidisseur se limite à un cordon. Ledit cordon est facilement posé dans le temps ouvert de la colle. L'injection permet de remplir de colle tout l'interface alors que l'orifice d'évent assure l'absence de poche d'air entre les deux. L'étape c) se déroule en n'ayant accès qu'à la face externe de la peau. Ainsi, ledit procédé est particulièrement adapté à la pose de la deuxième peau d'une structure en caisson. Selon une variante du procédé objet de l'invention, l'étape b) peut être réalisée avant l'étape a) notamment pour éviter l'introduction de copeaux à l'interface entre la semelle du raidisseur et la peau. Le cordon de colle posé sur la semelle du raidisseur permet de créer un espace d'épaisseur sensiblement calibré entre la peau et la semelle du raidisseur, sans modification de la forme de la semelle ou du panneau.

L'invention peut être mise en oeuvre selon les modes de réalisation avantageux exposés ci-après, lesquels peuvent être considérés individuellement ou selon toute combinaison techniquement opérante.

Avantageusement l'étape a) du procédé objet de l'invention comprend les opérations consistant à :
ai. déposer un cordon continu de colle sur le contour de la semelle du raidisseur ;
aii. positionner et accoster la peau sur la semelle du raidisseur ;
aiii. réaliser un congé de colle le long de l'emplacement du raidisseur sur la face de la peau assemblée avec ledit raidisseur ;
aiv. polymériser le cordon et le congé en conservant le contact de la peau sur le raidisseur.

Ainsi, l'effort de placage appliqué sur la peau est limité à la réalisation du fluage du cordon. Le maintien de la peau sur les raidisseurs est assuré par ce même cordon après polymérisation. Le congé permet d'assurer l'étanchéité de l'assemblage.

Selon une variante du procédé objet de l'invention adaptée au collage d'un raidisseur su une grande longueur, l'étape b) comprend les opérations consistant à :
bi. réaliser une pluralité de premiers orifices ;
bii. obturer lesdits premiers orifice à l'exception d'un d'entre eux par des moyens d'obturation provisoires ;
biii. réaliser le deuxième orifice.

Ces opérations peuvent être réalisées dans un ordre indifférent. En réalisant plusieurs premier orifices, dits d'injection, l'injection est mieux répartie sur toute la longueur de l'interface et la pression d'injection peut être réduite.

Selon cette variante du procédé, l'étape c) comprend les opérations consistant à :
ci. injecter la colle dans le premier orifice non obturé jusqu'à ce que le front de colle apparaisse sous les moyens obturant provisoirement l'un des premiers orifices réalisés à l'étape bi)
cii. obturer l'orifice d'injection précédent ;
ciii. découvrir l'orifice atteint par le front de colle et l'utiliser comme orifice d'injection jusqu'à ce que le front de colle apparaisse sous les moyens obturant provisoirement l'un des premiers orifice réalisés à l'étape bi) ;
civ. reprendre à l'étape cii) jusqu'à remplir l'interface entre la peau et le raidisseur.

Ainsi, la progression du front de colle est aisément suivie ce qui assure la qualité du collage.

L'invention concerne également un procédé pour la réalisation d'une structure comportant :
- une pluralité de raidisseurs s'étendant longitudinalement selon des directions concourantes, comportant en section une âme et des surfaces dites de pose s'étendant de part et d'autre de ladite âme
- deux peaux en contact avec l'ensemble des raidisseurs chacune sur les surfaces de pose opposées desdits raidisseurs de sorte à constituer des volumes vides entre les deux peaux ;

Lequel procédé est remarquable en ce que :
- la liaison d'au moins deux raidisseurs avec une des peaux est réalisée par un procédé selon une des variantes précédentes, et qu'il comprend les étapes consistant à :
   d. après la réalisation de l'étape c) de liaison d'un raidisseur avec ladite peau, attendre la polymérisation de la colle de cette liaison ;
   e. réaliser l'étape c) de liaison de l'autre raidisseur avec ladite peau après l'étape d).

Ce procédé est particulièrement adapté à la réalisation de structures de dimensions importantes et offre de la souplesse d'une part dans la gestion du temps ouvert de la colle, d'autre part dans la gestion des contraintes mécaniques liées au collage et imposées aux interfaces et à la structure.

Ce procédé peut être utilisé avantageusement pour la réalisation d'une structure caisson dont l'un des volumes vides est utilisé comme réservoir. Une telle structure présente en effet une étanchéité particulièrement efficace et durable car aucun alésage d'assemblage ne traverse les parois des volumes fermés. Par ailleurs ce mode d'assemblage offre la possibilité d'appliquer des primaire de protection sur les pièces élémentaires avant assemblage, lesquels primaires ne sont pas dégradés au cours des opérations d'assemblage subséquentes.

L'invention est exposée ci-après selon ses modes de réalisation préférés, nullement limitatifs, et en référence aux figures 1 à 7, dans les quelles :
- la figure 1A est une vue de face et en perspective d'une structure caisson selon un exemple de réalisation de l'invention, la figure 1A étant une vue en section d'un longeron de ladite structure représentée figure 1A ;
- la figure 2 montre en perspective selon le même point de vue que la figure 1A d'une structure caisson au cours d'une étape de mise en oeuvre du procédé objet de l'invention, et montre selon les sections AA et BB définies sur cette même figure la forme des cordons de colle déposés sur les semelles des longerons et de nervures secondaires, selon un exemple de réalisation du procédé objet de l'invention ;
- la figure 3 est une vue de face et en perspective de l'une des peaux de la structure caisson de la figure 1 au cours du perçage des trous d'injection et d'évent selon un mode de réalisation du procédé objet de l'invention ;
- la figure 4 est une vue en perspective et en éclaté de l'accostage de la peau sur les raidisseurs de la structure caisson après obturation d'une partie des orifices réalisés dans ladite peau au cours d'une étape précédente du procédé objet de l'invention ;
- la figure 5 est une vue partielle selon une coupe A-A définie figure 4, de la semelle du raidisseur et de la peau après l'étape d'accostage et la réalisation des congés de colle selon le procédé objet de l'invention ;
- la figure 6 illustre schématiquement et selon une vue de dessus les différentes étapes (figures 6A à 6D) de l'injection de colle à l'interface entre le raidisseur et la peau selon un exemple de réalisation du procédé objet de l'invention ;
- et la figure 7 montre un synoptique du procédé objet de l'invention.

Avant toute mise en oeuvre du procédé objet de l'invention, les surfaces concernées par le collage subissent une préparation selon les règles de l'art, telles qu'un dégraissage et un dérochage pour assurer des conditions adéquates d'adhésion de la colle aux dites surfaces.

Figure 2, selon une première étape du procédé objet de l'invention, un cordon de colle (210) structurale, adaptée à l'assemblage visé, est appliqué sur la périphérie de la semelle des raidisseurs en contact avec la peau. Ladite colle est appliquée au pistolet pneumatique avec une buse apte à créer le diamètre de cordon. À titre d'exemple non limitatif, les colles utilisées peuvent être à base de polyuréthane ou à base de résine époxyde, mono ou bi-composant selon la nature de l'assemblage, mais dans tous les cas, ladite colle doit présenter une viscosité suffisante à l'application pour pouvoir créer un tel cordon, c'est-à-dire une viscosité BROOKFIELD (selon la norme française NFT 76 102) supérieure ou égale à 100 000.10⁻³.Pa.s (100 000 centipoises). Lesdits cordons ont un diamètre compris entre 1 mm et 5 mm selon la largeur des semelles (118) des raidisseurs et des tolérances de forme, tant des raidisseurs (111, 112, 121, 122), que des peaux (101, 102). Selon une première variante, ledit cordon de colle s'étend sur tout le périmètre de la semelle (118) du raidisseur. Selon une autre variante (non représentée) une des extrémités n'est pas fermée par le cordon de colle.

Ce principe d'encollage par un cordon périphérique (210) est appliqué pour les raidisseurs dont la semelle (118) est suffisamment large, essentiellement les longerons (111,112). Dans le cas des nervures (121, 122, 123), s'il s'agit de nervures, dites fortes, dont la semelle est large, le même principe est appliqué, mais s'il s'agit de nervures secondaires (121, 122, 123) de faible largeur, l'encollage peut-être réalisé réalisé par un seul cordon (211) de section sensiblement trapézoïdale.

Selon des exemples non limitatifs les colles époxydes distribuées commercialement sous la marque 3M® référence SW 9323-2, ou sous la marque HUNTSMAN® AW 4859 sont adaptées à la mise en oeuvre du procédé objet de l'invention.

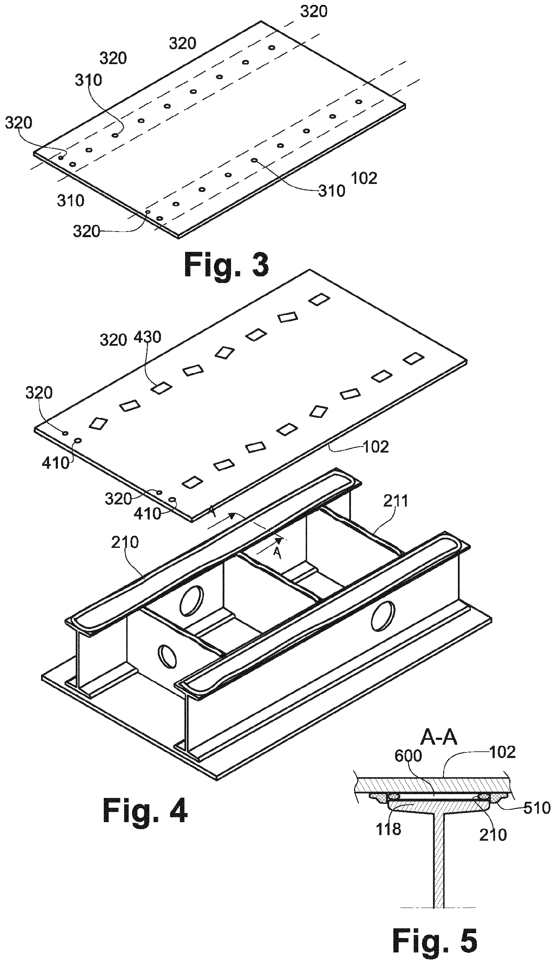

Figure 3, parallèlement ou préalablement aux opérations précédentes, une pluralité de trous (310), dits d'injection, et de trous (320), dits d'évent, tous traversants, sont percés dans la peau (102) devant être assemblée, aux emplacements futurs des raidisseurs sur ladite peau (102) et pour lesquels le procédé d'injection est mis en oeuvre. Le nombre, le pas et la position des trous sont déterminés en fonction des propriétés de la colle, notamment de sa viscosité, et des propriétés des interfaces, soit par simulation soit par l'expérience, de sorte à assurer une progression uniforme du front de colle dans tout le volume de l'interface. Le diamètre des trous d'injection (310) est juste nécessaire pour le passage de la buse d'un pistolet à colle, laquelle buse est choisie de sorte à permettre le remplissage de l'interface entre la semelle du raidisseur et la peau, notamment en fonction de la largeur de cette interface. Typiquement le diamètre des trous d'injection est compris entre 5 mm et 10 mm selon la largeur de l'interface.

Figure 4, les trous d'injection réalisés à l'étape précédente sont obturés individuellement à l'aide de moyens d'obturation provisoires tels que des bouchons en plastique ou un ruban adhésif (430), à l'exception des trous d'injection initiaux (410) et des trous d'évent (320). La peau est alors accostée avec la structure caisson sur les raidisseurs encollés par les cordons (210, 211) de colle, au moyen d'un outillage adapté, en appliquant sur ladite peau (102) une pression juste suffisante pour écraser les cordons (210, 211) de colle posés sur les semelles (118) des raidisseurs.

Figure 5, des congés (510) de colle sont réalisés sur la face de la peau (102) en contact avec lesdits raidisseurs. Ces congés sont réalisés par lissage du surplus de colle apparaissant lors de l'écrasement des cordons (210) périphériques et complétés par un éventuel ajout de colle au pistolet. Lors de l'installation de la seconde peau (102) sur la structure caisson, cette opération est réalisée par les trappes (140) de visite ou par les alésages pratiqués dans les âmes des raidisseurs dans le but de les alléger, ou encore par une extrémité ouverte de la structure caisson.

Ainsi, les volumes (600) délimités par les cordons (210) de colle entre la peau (102) et les semelles (118) des raidisseurs sont clos de manière étanche. La colle (210, 510, 211) est alors polymérisée de sorte à fixer la peau (102) sur les semelles des raidisseurs. Les conditions de polymérisation dépendent essentiellement de la nature de la colle. À titre d'exemple non limitatif, le temps de polymérisation d'une colle de type commercial cité *supra,* pour la jonction de raidisseurs et d'une peau constitués d'une résine thermodurcissable renforcée par des fibres de carbone est de 15 jours à température ambiante ou de 24 heures à température ambiante suivies d'une heure à 80 °C ou encore de deux heures à 65 °C.

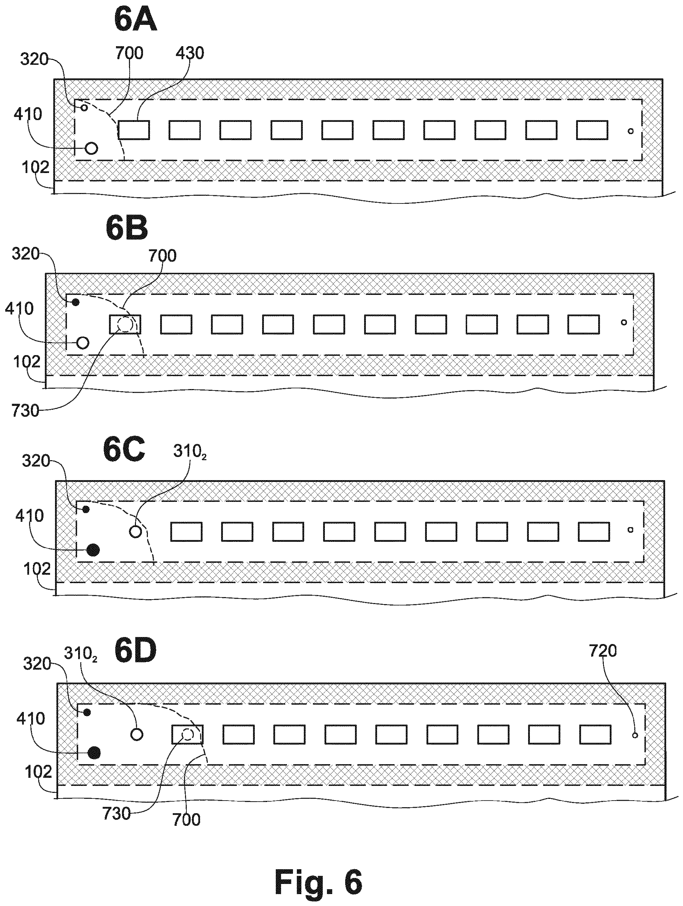

Figure 6A, après polymérisation complète des cordons de colle, l'injection à l'interface entre un raidisseur et la peau (102) est démarrée en introduisant la buse d'un pistolet à colle dans l'orifice (410) d'injection initial, le trou d'évent (320) étant ouvert. La colle est injectée par l'orifice (410) d'injection initial de sorte à faire progresser le front de colle (700) jusqu'à ce que de la colle soit éjectée par le trou (320) d'évent.

Figure 6B, le trou d'évent (320) est alors obturé à l'aide d'un bouchon en matière plastique et l'injection à travers l'orifice (410) initial d'injection est poursuivie jusqu'à ce que le front de colle (700) atteigne l'orifice d'injection suivant ce qui se traduit par l'apparition de colle sous les moyens d'obturation provisoire de cet orifice, par exemple sous la forme d'un renflement (730) sous le ruban adhésif (430) obturant ledit orifice.

Figure 6C, l'orifice d'injection initial (410) est alors obturé par un bouchon plastique et l'injection est reprise en introduisant la buse du pistolet à colle dans l'orifice (310₂) d'injection suivant, après avoir retiré le ruban adhésif (430) qui l'obturait.

Figure 6D, l'injection par le deuxième orifice (310₂) d'injection est poursuivie jusqu'à ce que le front de colle (700) atteigne le troisième orifice ce qui se traduit par l'apparition de la colle ou un renflement (730) sous le ruban adhésif (430) obturant ledit orifice. Le deuxième orifice d'injection (310₂) est alors obturé et l'injection est reprise par l'orifice d'injection suivant et ainsi de suite, jusqu'au remplissage complet du volume d'entrefer (600) entre la semelle du raidisseur et la peau. L'obturation des orifices en aval du front de colle par un simple ruban adhésif, assure que la pression dans l'entrefer (600) entre la semelle du raidisseur et la peau reste comprise dans des valeurs acceptables ne risquant pas de décoller la peau des raidisseur. Le choix des moyens d'obturation provisoire est ainsi déterminé en fonction de la pression à atteindre au cours de l'injection à l'interface entre la peau et le raidisseur. L'utilisation de bouchons en matière plastique comportant des moyens permettant de limiter leur force de maintien dans l'alésage permet d'atteindre, si nécessaire, des pressions d'injection plus élevées que celles qui sont autorisées par les obturations au moyen de ruban adhésif.

L'air contenu dans l'entrefer est évacuée à mesure de la progression du front de colle ce qui assure une bonne qualité de collage. L'assurance d'arrivée du front de colle (700) à l'extrémité du raidisseur est obtenue visuellement, soit par le débordement de la colle à l'extrémité du raidisseur lorsque l'interface entre la peau et la semelle du raidisseur est ouvert à cette extrémité, soit par l'éjection de la colle par un trou d'évent (720) d'extrémité lorsque cette interface est entièrement fermée par le cordon de colle, lequel trou d'évent (720) n'est alors, à aucun moment, obturé par des moyens d'obturation provisoires.

L'ensemble de ces opérations est alors répété pour un autre raidisseur et ainsi de suite jusqu'à ce que l'ensemble des collages soit réalisé. La réalisation du collage de deux raidisseurs différents peut être espacée dans le temps, ce qui offre de la souplesse dans la gestion des contraintes de collage, notamment lorsque le temps ouvert est réduit, ou que la polymérisation de la colle est particulièrement exothermique et que, par exemple, les raidisseurs et les peaux sont constitués de matériaux ayant des coefficients de dilatation thermique différents.

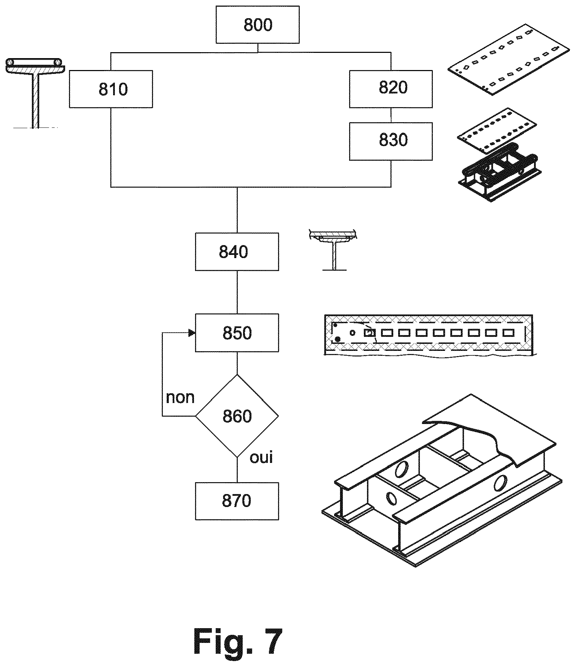

Figure 7, selon un synoptique du procédé objet de l'invention, les étapes essentielles du procédé objet de l'invention se déroulent en partant de pièces élémentaires dont les surfaces ont été préparées au collage au cours d'une étape (800) de préparation par :
- une étape (820) de préparation de la peau (102) consistant à réaliser dans ladite peau le perçage des orifices d'injection et d'évent ;
- un ensemble d'étapes (810, 830, 840) visant à étancher les entrefers entre les raidisseurs et la peau et qui comprennent :
   - une étape (810) de réalisation des cordons de colle sur les semelles des raidisseurs ;
   - une étape (820) de perçage de la peau et d'installation des moyens d'obturation provisoire ;
   - un étape (830) d'accostage de la peau sur les raidisseurs suivie de de la réalisation des congés de colle ;
   - une étape (840) de polymérisation de la colle aux interfaces entre la peau et les raidisseurs ;
- une étape (850) d'injection visant remplir de colle l'interface entre un des raidisseurs et la peau ;
- une étape (860) éventuelle d'attente, l'étape d'injection (850) étant répétée tant que tous les raidisseurs ne sont pas entièrement collés.

Ces étapes essentielles sont suivies par une étape (870) de parachèvement durant laquelle un ragréage est réalisé de sorte à régler l'affleurement du bourrelet de colle, polymérisée, dépassant par les orifices d'injection et d'évent.

En revenant à la figure 1, la structure (100) ainsi réalisée est une structure dite caisson, comprenant des volumes vides, par exemple le volume compris entre les deux peaux (101, 102), les deux longerons (111, 112) et les deux premières nervures (121, 122). Les deux peaux (101, 102) étant assemblées aux raidisseurs (111, 112, 121, 122) par le procédé objet de l'invention, à aucun moment un alésage d'assemblage ne pénètre à l'intérieur de ce volume. La méthode de collage objet de l'invention assurant un remplissage parfait des entrefers entre les semelles des raidisseurs, ce volume vide, dont le procédé d'assemblage de la structure (100) ne nécessite pas qu'il soit habité par un noyau, est étanche après fermeture des trappes d'accès éventuelles et peut avantageusement être utilisé comme réservoir.

La description ci-avant et les exemples de réalisation montrent que l'invention atteint les objectifs visés, en particulier, elle permet la réalisation d'une structure caisson étanche sans la pose de fixations. Elle est plus particulièrement adaptée à la réalisation de telles structures dont les peaux et les raidisseurs sont constitués de matériaux composites à renfort fibreux. Par commodité de représentation le procédé objet de l'invention est représenté appliqué à une forme simple de structure caisson. Le procédé est cependant adaptable à une forme complexe de la dite structure, notamment sur des formes non développables où ledit procédé d'assemblage offre l'avantage d'être moins sensible aux tolérances de fabrication et de positionnement de telles structures que les procédés d'assemblage de l'art antérieur faisant appel à des fixations de type rivet. Ainsi le procédé objet de l'invention est particulièrement adapté à la réalisation de voilures d'aéronef.

## Revendications

1. Procédé pour l'assemblage d'une peau (101, 102) et de la semelle (118) d'un raidisseur (111, 112, 121, 122) **caractérisé en ce qu'**il comprend les étapes consistant à :
a. étancher (810, 830, 840) la périphérie du contact entre la peau et la semelle du raidisseur en déposant un cordon (210, 211) de colle sur la semelle du raidisseur destinée à entrer en contact avec la peau et en accostant, ensuite, la peau sur la semelle du raidisseur;
b. réaliser (820) un premier (310) orifice, dit d'injection, et un deuxième (320) orifice, dit d'évent, dans la peau, lesdits orifices débouchant à l'interface entre la peau (102) et la semelle (118) du raidisseur ;
c. injecter (850) par le premier orifice de la colle à l'interface (600) entre la peau et la semelle du raidisseur en maintenant ladite peau en contact avec le raidisseur jusqu'à ce que la colle remplisse entièrement l'interface (600) entre la peau et le raidisseur.

2. Procédé selon la revendication 1, **caractérisé en ce que** l'étape a) comprend les opérations consistant à :
ai. déposer (810) un cordon (210) continu de colle sur le contour de la semelle du raidisseur ;
aii. positionner et accoster (830) la peau sur la semelle du raidisseur ;
aiii. réaliser un congé de colle (510) le long de l'emplacement du raidisseur sur la face de la peau (102) assemblée avec ledit raidisseur ;
aiv. polymériser (840) le cordon (210) et le congé (510) en conservant le contact de la peau sur le raidisseur.

3. Procédé selon la revendication 1, **caractérisé en ce que** l'étape b) comprend les opérations consistant à :
bi. réaliser une pluralité de premiers (310) orifices ;
bii. obturer lesdits premiers orifices (310) à l'exception d'un (410) d'entre eux par des moyens d'obturation provisoires (430) ;
biii. réaliser un deuxième (320, 720) orifice.

4. Procédé selon la revendication 3, **caractérisé en ce que** l'étape c) comprend les opérations consistant à :
ci. injecter la colle dans le premier orifice (410) non obturé jusqu'à ce que le front (700) de colle apparaisse sous les moyens (430) obturant provisoirement l'un des premiers orifices réalisés à l'étape bi)
cii. obturer l'orifice d'injection précédent ;
ciii. découvrir l'orifice (310₂) atteint par le front de colle et l'utiliser comme orifice d'injection jusqu'à ce que le front de colle apparaisse sous les moyens (430) obturant provisoirement l'un des premiers orifice réalisés à l'étape bi) ;
civ. reprendre à l'étape cii) jusqu'à remplir l'interface (600) entre la peau et le raidisseur.

5. Procédé pour la réalisation d'une structure, dite caisson comportant :
- une pluralité de raidisseurs (111, 112, 121, 122) s'étendant selon des directions concourantes, comportant en section une âme (115) et des surfaces (130) dites de pose s'étendant de part et d'autre de ladite âme
- deux peaux (101, 102) en contact avec l'ensemble des raidisseurs chacune sur les surfaces de pose opposées desdits raidisseurs de sorte à constituer des volumes vides entre les deux peaux ;
**caractérisé en ce que** :
- la liaison d'au moins deux des raidisseurs (111,112) avec une des peaux (101, 102) est réalisée par un procédé selon la revendication 1, et qu'il comprend les étapes consistant à :
d. après la réalisation de l'étape c) (850) de liaison d'un raidisseur avec ladite peau, attendre (860) la polymérisation de la colle de cette liaison ;
e. réaliser l'étape c) (850) de liaison d'un autre raidisseur avec ladite peau après l'étape d).

## Patentansprüche

1. Verfahren zum Zusammenfügen von einer Haut (101, 102) und der Sohle (118) einer Versteifung (111, 112, 121, 122), **dadurch gekennzeichnet, dass** es die folgenden Schritte aufweist:
a. Abdichten (810, 830, 840) des Umfangs des Kontakts zwischen der Haut und der Sohle der Versteifung, indem ein Klebstoffstrang (210, 211) auf die Sohle der Versteifung aufgetragen wird, die dazu bestimmt ist, in Kontakt mit der Haut zu kommen, und indem dann die Haut auf der Sohle der Aussteifung angeordnet wird;
b. Erstellen (820) einer ersten (310) Einspritzöffnung und einer zweiten (320) Öffnung, die Entlüftungsöffnung genannt wird, in der Haut, wobei die Öffnungen in die Schnittstelle zwischen der Haut (102) und der Sohle (118) der Versteifung münden;
c. Einspritzen (850) des Klebstoffs durch die erste Öffnung an der Schnittstelle (600) zwischen der Haut und der Sohle der Versteifung, indem die Haut mit der Versteifung in Kontakt gehalten wird, bis der Klebstoff die Schnittstelle (600) zwischen der Haut und der Versteifung vollkommen füllt.

2. Verfahren nach Anspruch 1, **dadurch gekennzeichnet, dass** der Schritt a) die Vorgänge aufweist, die darin bestehen:
ai. einen kontinuierlichen Klebstoffstrang (210) auf die Kontur der Sohle der Versteifung aufzutragen (810);
aii. die Haut auf der Sohle der Versteifung zu positionieren und anzuordnen (830);
aiii. eine Klebstoffkehle (510) entlang der Stelle der Versteifung auf der Seite der Haut (102) zu erstellen, die mit der Versteifung zusammengefügt wird;
aiv. den Strang (210) und die Kehle (510) zu polymerisieren (840), indem der Kontakt der Haut auf der Versteifung erhalten wird.

3. Verfahren nach Anspruch 1, **dadurch gekennzeichnet, dass** der Schritt b) die Vorgänge aufweist, die darin bestehen:
bi. mehrere erste (310) Öffnungen zu erstellen;
bii. die ersten Öffnungen (310) mit Ausnahme von einer (410) von ihnen durch provisorische Verschlussmittel (430) zu verschließen;
biii. eine zweite (320, 720) Öffnung zu erstellen.

4. Verfahren nach Anspruch 3, **dadurch gekennzeichnet, dass** der Schritt c) die Vorgänge aufweist, die darin bestehen:
ci. Klebstoff in die erste Öffnung (410), die nicht verschlossen ist, einzuspritzen, bis die Klebstofffront (700) unter den Mitteln (430) erscheint, die eine der ersten Öffnungen, die in Schritt bi) erstellt wurden, provisorisch verschließen;
cii. die vorherige Einspritzöffnung zu verschließen;
ciii. die Öffnung (310₂) zu entdecken, die von der Klebstofffront erreicht wird, und sie als Einspritzöffnung zu verwenden, bis die Klebstofffront unter den Mitteln (430) erscheint, die eine der ersten Öffnungen, die in Schritt bi) erstellt wurden, provisorisch verschließen;
civ. von Schritt cii) ab bis zum Auffüllen der Schnittstelle (600) zwischen der Haut und der Versteifung zu wiederholen.

5. Verfahren zur Herstellung einer sogenannten Boxenstruktur, umfassend:
- mehrere Versteifungen (111, 112, 121, 122), die sich in konvergierenden Richtungen erstrecken, die im Querschnitt einen Kern (115) und sogenannte Befestigungsflächen (130) aufweisen, die sich beiderseits des Kerns erstrecken,
- zwei Häute (101, 102) in Kontakt mit der Anordnung der Versteifungen, die jeweils auf den gegenüberliegenden Befestigungsflächen der Versteifungen sind, derart, um Hohlvolumina zwischen den zwei Häuten zu bilden;
**dadurch gekennzeichnet, dass**:
- das Verbinden von mindestens zwei der Versteifungen (111, 112) mit einer der Häute (101, 102) durch ein Verfahren nach Anspruch 1 durchgeführt wird, und dass es die Schritte aufweist, die darin bestehen:
d. nach dem Durchführen des Schrittes c) (850) des Verbindens von einer Versteifung mit der Haut (860) die Polymerisation des Klebstoffs dieser Verbindung abzuwarten;
e. den Schritt c) (850) des Verbindens von einer anderen Versteifung mit der Haut nach dem Schritt d) durchzuführen.

## Claims

1. Method for the assembly of a skin (101, 102) and of the flange (118) of a stiffener (111, 112, 121, 122), **characterized in that** it comprises the steps consisting in:
a. sealing (810, 830, 840) the periphery of the contact between the skin and the flange of the stiffener by depositing a bead (210, 211) of adhesive on the flange of the stiffener intended to come into contact with the skin and by subsequently squeezing the skin on the flange of the stiffener;
b. producing (820) a first orifice (310), termed injection orifice, and a second orifice (320), termed vent orifice, in the skin, said orifices opening at the interface between the skin (102) and the flange (118) of the stiffener;
c. injecting (850) adhesive through the first orifice at the interface (600) between the skin and the flange of the stiffener while keeping said skin in contact with the stiffener until the adhesive entirely fills the interface (600) between the skin and the stiffener.

2. Method according to Claim 1, **characterized in that** the step a) comprises the operations consisting in:
ai. depositing (810) a continuous bead (210) of adhesive on the contour of the flange of the stiffener;
aii. positioning and squeezing (830) the skin on the flange of the stiffener;
aiii. producing an adhesive fillet (510) along the location of the stiffener on the face of the skin (102) assembled with said stiffener;
aiv. curing (840) the bead (210) and the fillet (510) while maintaining the contact of the skin on the stiffener.

3. Method according to Claim 1, **characterized in that** the step b) comprises the operations consisting in:
bi. producing a plurality of first orifices (310);
bii. occluding said first orifices (310) except for one (410) of them by temporary occluding means (430);
biii. producing a second orifice (320, 720).

4. Method according to Claim 3, **characterized in that** the step c) comprises the operations consisting in:
ci. injecting the adhesive into the non-occluded first orifice (410) until the adhesive front (700) appears below the means (430) temporarily occluding one of the first orifices produced in the step bi);
cii. occluding the preceding injection orifice;
ciii. uncovering the orifice (310₂) reached by the adhesive front and using it as an injection orifice until the adhesive front appears below the means (430) temporarily occluding one of the first orifices produced in the step bi);
civ. repeating the step cii) until the interface (600) between the skin and the stiffener is filled.

5. Method for producing a structure, termed box structure, comprising:
- a plurality of stiffeners (111, 112, 121, 122) extending in concurrent directions, comprising, in cross section, a web (115) and surfaces (130), termed application surfaces, extending on either side of said web;
- two skins (101, 102) in contact with all the stiffeners, each skin on the opposite application surfaces of said stiffeners so as to constitute empty volumes between the two skins;
**characterized in that**:
- the connection of at least two of the stiffeners (111, 112) with one of the skins (101, 102) is carried out by a method according to Claim 1, and **in that** it comprises the steps consisting in:
d. after carrying out the step c) (850) of connection of a stiffener with said skin, waiting (860) for the adhesive of this connection to cure;
e. carrying out the step c) (850) of connection of another stiffener with said skin after the step d).
